# EUROPEAN PATENT SPECIFICATION

(11) **EP 2 247 677 B1**
(45) Date of publication and mention of the grant of the patent: **21.12.2016**
(21) Application number: 09718043.4
(22) Date of filing: 25.02.2009
(51) Int. Cl.: C09D 127/12, C09D 163/00, C09D 175/02, C09D 175/04, F03D 1/00

(54) **COMPOSITES COMPRISING A MULTI-LAYER COATING SYSTEM**
VERBUNDSTOFFE MIT EINEM MEHRSCHICHTIGEN BESCHICHTUNGSSYSTEM
COMPOSITES COMPRENANT UN SYSTÈME DE REVÊTEMENT MULTICOUCHES

(30) Priority: 29.02.2008 US 32529 P; 24.02.2009 US 391463
(43) Date of publication of application: 10.11.2010
(73) Proprietor: PPG Industries Ohio, Inc., Cleveland, OH 44111 (US)
(72) Inventor: CONNELLY, Bruce A., Gibsonia Pennsylvania 15044 (US); VALENTA, Jane N., Pittsburgh Pennsylvania 15208 (US)
(74) Representative: f & e patent
(86) International application number: PCT/US2009/035041
(87) International publication number: WO 2009/111227

(56) References cited:
- EP-A- 0 976 544
- WO-A-00/11095
- WO-A-03/078534
- WO-A-2005/092586
- WO-A-2006/038702
- WO-A-2006/076724
- FR-A- 2 026 468
- US-A1- 2006 287 463

## Description

### FIELD OF THE INVENTION

The present invention relates to composites comprising a multi-layer coating system.

### BACKGROUND OF THE INVENTION

Wind power is the conversion of wind energy into a useful form, such as electricity, using wind turbines. At the end of 2007, worldwide capacity of wind-powered generators was 94.1 gigawatts. Although wind currently produces just over 1% of world-wide electricity use, it accounts for approximately 19% of electricity production in Denmark, 9% in Spain and Portugal, and 6% in Germany and the Republic of Ireland (2007 data). Globally, wind power generation increased more than fivefold between 2000 and 2007.

Wind power is produced in large scale wind farms connected to electrical grids, as well as in individual turbines for providing electricity to isolated locations. Wind turbines typically have 2 to 4 large blades and are designed to last around 20 to 25 years. The optimum number of blades for a wind turbine depends on the job the turbine will do. Turbines for generating electricity need to operate at high speeds, but do not need much torque or turning force. These machines generally have two or three blades. Wind pumps, in contrast, operate with more torque but not much speed and therefore have many blades.

WO 2005/092586 A1 is directed to moulds for preparing wind turbine blades and a method of manufacturing the wind turbine blade by an in-mould-process. The material to form the coating comprises acrylic-based material, polycarbonate, polyvinylidene fluoride and polyurethane.

US 2006/0287463 A1 and WO 2003/078534 A1 relate to a two-component composition comprising a polyol component and a polyisocyanate component for producing polyurethane gel coats for epoxy resin and vinyl ester resin composite materials, e.g. wind vanes. The polyurethane gel coat is applied to the materials by an in-mould process. US 2006/0287463 A1 and WO 2003/078534 A1 are silent about a topcoat on the polyurethane gel coat.

None of the prior art references teaches depositing a primer and then applying topcoat.

Wind turbine blades, or "wind blades" are constantly exposed to the elements and are ideally designed to endure temperature extremes, wind shears, precipitation, and/or other environmental hazards with minimal failure. Coating failure is often observed on the leading edge of the blade. The "leading edge" of the blade will be understood as referring to the portion of the blade that cuts into the wind, while the trailing edge is the opposite edge. The leading edge can be smooth or comprise bumps or "tubercles" that help to reduce noise, increase stability and/or enable the blade to capture more energy. The leading edge is typically subjected to environmental factors such as salt, sand, dirt and other particulates causing dry abrasion, as well as environmental factors such as wind, rain, snow and the like. Accordingly, accelerated coating failure and/or corrosion may be observed on the leading edge. Additional protection on the leading edge is therefore often desired.

It would be desirable to provide coating compositions to protect wind turbine blades and extend the service life of the blades. Ideally, these coating compositions could be applied to blade substrates with minimal substrate surface preparation and would provide leading edge erosion resistance.

### SUMMARY OF THE INVENTION

The present invention is directed to a composite comprising a multi-layer coating system applied to at least a portion thereof, comprising:
(1) a first coating layer deposited from a primer composition; and
(2) a topcoat composition applied over at least a portion of the first coating layer in which the topcoat is deposited from
   (2a) a film-forming composition comprising a fluorinated acrylic polymer or
   (2B) a film-forming composition comprising:
      (a) a functional component comprising hydroxyl and/or amine groups wherein the functional component is selected from an acrylic polymer, a polyester polymer, a polyurethane polymer, a polyurea polymer and/or a polyether polymer; and
      (b) a curing agent comprising isocyanate and/or anhydride
   functional groups; and when the curing agent comprises isocyanate, the ratio of isocyanate to hydroxyl and/or amine groups is >1:1 and wherein the composite comprises a matrix material and a reinforcement material.

Methods of repairing wind blades, are also within the scope of the present invention.

### DETAILED DESCRIPTION OF THE INVENTION

Other than in any operating examples, or where otherwise indicated, all numbers expressing quantities of ingredients, reaction conditions and so forth used in the specification and claims are to be understood as being modified in all instances by the term "about." Accordingly, unless indicated to the contrary, the numerical parameters set forth in the following specification and attached claims are approximations that may vary depending upon the desired properties to be obtained by the present invention. At the very least each numerical parameter should at least be construed in light of the number of reported significant digits and by applying ordinary rounding techniques. Including and like terms means including but not limited to.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

As used in this specification and the appended claims, the articles "a," "an," and "the" include plural referents unless expressly and unequivocally limited to one referent. For example, although reference is made herein to "a" first coating layer, "a" primer composition, "a" topcoat, "a" curing agent and the like, one or more of each of these components, and of any other components, can be used.

As used in the following description and claims, the following terms have the meanings indicated below:

The term "curable", as used for example in connection with a curable composition, means that the indicated composition is polymerizable or cross linkable through functional groups, e.g., by means that include, but are not limited to, thermal (including ambient cure) and/or catalytic exposure.

The term "cure", "cured" or similar terms, as used in connection with a cured or curable composition, e.g., a "cured composition" of some specific description, means that at least a portion of the polymerizable and/or crosslinkable components that form the curable composition is polymerized and/or crosslinked. Additionally, curing of a polymerizable composition refers to subjecting said composition to curing conditions such as but not limited to thermal curing, leading to the reaction of the reactive functional groups of the composition, and resulting in polymerization and formation of a polymerizate. When a polymerizable composition is subjected to curing conditions, following polymerization and after reaction of most of the reactive end groups occurs, the rate of reaction of the remaining unreacted reactive end groups becomes progressively slower. The polymerizable composition can be subjected to curing conditions until it is at least partially cured. The term "at least partially cured" means subjecting the polymerizable composition to curing conditions, wherein reaction of at least a portion of the reactive groups of the composition occurs, to form a polymerizate.

The terms "reactive" and "functional" refer to a compound or group capable of undergoing a chemical reaction with itself and/or other functional groups and/or compounds spontaneously or upon the application of heat or in the presence of a catalyst or by any other means known to those skilled in the art.

By "polymer" is meant a polymer including homopolymers and copolymers, and oligomers and the prefix "poly" means two or more.

Film-forming compositions used as the first coating layer are primer coating compositions. A "primer" will be understood as generally referring to a coating applied as an undercoat or preparatory coating; that is, a coating that is covered by one or more additional coating layers. Often, a primer layer provides a functional advantage to a substrate. For example, a primer may serve to smooth or "fill in" pores or crevices on a substrate, impart corrosion resistance to a substrate, improve adhesion to the substrate, increase durability to subsequent coating layers, and/or impart chip resistance to subsequent coating layers. Examples of suitable primer coating compositions include any known to be useful as industrial primer coatings. In certain other embodiments of the present invention, the film-forming composition used as the first coating layer comprises a functional polymer containing an epoxide and/or hydroxyl group. For example, the film-forming composition used as the first coating layer may comprise one or more epoxy-functional polymers, each polymer typically having epoxide or oxirane groups. As used herein, "epoxy-functional polymers" means polymers comprising epoxy functionality. These materials often are referred to as di- or polyepoxides. Generally, the epoxide equivalent weight of the epoxy-functional polymer can range from 70 to 4,000, such as 140 to 600, as measured by titration with perchloric acid and quaternary ammonium bromide using methyl violet as an indicator.

Suitable epoxy-functional polymers can be saturated or unsaturated, cyclic or acyclic, aliphatic, alicyclic, aromatic or heterocyclic. The epoxy-functional polymers can have pendant or terminal hydroxyl groups, if desired. They can contain substituents such as halogen, hydroxyl, and/or ether groups. A useful class of these materials includes polyepoxides comprising epoxy polyethers obtained by reacting an epihalohydrin (such as epichlorohydrin or epibromohydrin) with a di- or polyhydric alcohol in the presence of an alkali. Suitable polyhydric alcohols include polyphenols such as resorcinol; catechol; hydroquinone; bis(4-hydroxyphenyl)-2,2-propane, i.e., bisphenol A; bis(4-hydroxyphenyl)-1,1-isobutane; 4,4-dihydroxybenzophenone; bis(4-hydroxyphenol)-1,1-ethane; bis(2-hydroxyphenyl)-methane and 1,5-hydroxynaphthalene.

Frequently used polyepoxides include diglycidyl ethers of Bisphenol A, such as EPON 828 or 1001 epoxy resins, which are commercially available from Shell Chemical Company. Other useful polyepoxides include polyglycidyl ethers of polyhydric alcohols, polyglycidyl esters of polycarboxylic acids, polyepoxides that are derived from the epoxidation of an olefinically unsaturated alicyclic compound, polyepoxides containing oxyalkylene groups in the epoxy molecule, epoxy novolac resins, and polyepoxides that are partially defunctionalized by carboxylic acids, alcohol, water, phenols, mercaptans or other active hydrogen-containing compounds to give hydroxyl-containing polymers. These polyepoxides are well known to those skilled in the art and are described in U.S. Pat. No. 4,739,019 at column 2, line 6 through column 3, line 12.

In certain embodiments of the present invention, the film-forming composition used as the first coating layer comprises a polyurea and/or a polyurethane. Other suitable functional polymers used to form the polyurea and/or polyurethane include any of those discussed below as suitable for use as functional components in the topcoat composition.

The amount of the functional polymer in the film-forming composition used in the first coating layer can vary depending in part upon the intended application of the composition. In certain embodiments, the functional polymer is present in an amount ranging from 10 to 90 percent by weight based on the total weight of resin solids in the film-forming composition, such as 35 to 60 weight percent, or 40 to 50 weight percent.

One or more curing agents having functional groups reactive with the functionality on the functional polymer may also be used in the first coating layer, unless the functional polymer can react with itself, in which case additional curing agents may or may not be used. Useful curing agents for polyepoxide functional polymers include, for example, aliphatic, cycloaliphatic, and aromatic polyfunctional amines such as ethylene diamine, diethylene triamine, triethylene tetraamine, tetraethylene pentamine, 1,4-diaminobutane; 1,3-diaminobutane, hexamethylene diamine, 3-(N-isopropylamino)propylamine, diaminocyclohexane, and polyoxypropylene amines commercially available under the trademark designation JEFFAMINE; meta-phenylene diamine; p,p'-methylene dianiline, and 1,4-aminonaphthalene; polyurea; polyamides such as those derived from polyacids, fatty acids, dimerized fatty acids or polymeric fatty acids and aliphatic polyamines, for example, the materials commercially available from Henckel under the trademark designations VERSAMIDE 220 or 125; imidazoles; dicyandiamide; and boron trifluoride complexes such as boron trifluoride monoethylamine complex, boron trifluoride diethylamine complex; boron trifluoride triethylamine complex; boron trifluoride pyridine complex; boron trifluoride benzyldimethylamine complex; boron trifluoride benzylamine, boron trifluoride etherate and as are disclosed in U.S. Pat. No. 4,739,019, at column 5, lines 24-62. Useful curing agents for functional polymers containing hydroxyl groups include polyisocyanates and polyanhydrides discussed below as suitable for use in the topcoat composition.

The curing agent, if used, can be present in the film-forming compositions of the first coating layer in an amount ranging from 10 to 90 percent by weight, such as 40 to 65 percent by weight, or 50 to 60 percent by weight, based on the total weight of resin solids in the composition.

The film-forming composition used in the first coating layer may further comprise a filler. Examples of fillers include finely divided minerals such as barium sulfate, silica, including fumed silica and/or colloidal silica, alumina, colloidal alumina, titanium dioxide, zirconia, colloidal zirconia, clay, mica, dolomite, talc, magnesium carbonate, calcium carbonate, calcium sulfate, calcium silicate, and/or calcium metasilicate. While not intending to be bound by any theory, it is believed that the fillers, in combination with the resins in the composition in certain embodiments of the present invention, allow for useful rheological properties such as high viscosity at low shear. The combination of fillers and resins in the first coating layer may also allow for filling and/or bridging of surface defects on a substrate, making the substrate surface smoother than would be possible with other coating compositions. In this manner, in certain embodiments the "primer" layer serves to fill voids in the composite substrate, thus presenting a smoother surface to which the topcoat is applied. The ability of the first coating layer to smooth surface defects on the substrate substantially decreases the need for substrate surface preparation such as by sanding and/or the use of body putty before applying the first coating layer, which can be time-consuming, labor-intensive, and expensive manufacturing steps, although putty or other pretreatment can be used when necessary. This advantage is particularly useful in the coating of large substrate parts or substrates with significant surface roughness, such as composites used in the manufacturing of wind blades.

The film-forming composition used as the first coating layer can include a variety of optional ingredients and/or additives that are somewhat dependent on the particular application of the composition, such as one or more of curing catalysts, titanium dioxide, carbon black, graphite or other colorants, reinforcements, thixotropes, accelerators, surfactants, plasticizers, extenders, stabilizers, corrosion inhibitors, diluents, and/or antioxidants.

The film-forming composition used as the first coating layer may include a colorant. As used herein, the term "colorant" means any substance that imparts color and/or other opacity and/or other visual effect to the composition. The colorant can be added to the coating in any suitable form, such as discrete particles, dispersions, solutions and/or flakes. A single colorant or a mixture of two or more colorants can be used in the coatings of the present invention.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by grinding or simple mixing. Colorants can be incorporated by grinding into the coating by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black and mixtures thereof. The terms "pigment" and "colored filler" can be used interchangeably.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene, aluminum, quinacridone, thiazole, thiazine, azo, indigoid, nitro, nitroso, oxazine, phthalocyanine, quinoline, stilbene, and triphenyl methane.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemical, Inc.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in U.S. Patent No. 6,875,800 B2. Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are identified in U.S. Patent Application Publication No. 2005/0287348 A1, and U.S. Provisional Application No. 60/482,167 filed June 24, 2003.

Example special effect compositions that may be used in the coating of the present invention include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions can provide other perceptible properties, such as reflectivity, opacity or texture. In a non-limiting embodiment, special effect compositions can produce a color shift, such that the color of the coating changes when the coating is viewed at different angles. Example color effect compositions are identified in U.S. Patent No. 6,894,086. Additional color effect compositions can include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

In certain non-limiting embodiments, a photosensitive composition and/or photochromic composition, which reversibly alters its color when exposed to one or more light sources, can be used in the coating of the present invention. Photochromic and/or photosensitive compositions can be activated by exposure to radiation of a specified wavelength. When the composition becomes excited, the molecular structure is changed and the altered structure exhibits a new color that is different from the original color of the composition. When the exposure to radiation is removed, the photochromic and/or photosensitive composition can return to a state of rest, in which the original color of the composition returns. In one non-limiting embodiment, the photochromic and/or photosensitive composition can be colorless in a non-excited state and exhibit a color in an excited state. Full color-change can appear within milliseconds to several minutes, such as from 20 seconds to 60 seconds. Example photochromic and/or photosensitive compositions include photochromic dyes.

In a non-limiting embodiment, the photosensitive composition and/or photochromic composition can be associated with and/or at least partially bound to, such as by covalent bonding, a polymer and/or polymeric materials of a polymerizable component. In contrast to some coatings in which the photosensitive composition may migrate out of the coating and crystallize into the substrate, the photosensitive composition and/or photochromic composition associated with and/or at least partially bound to a polymer and/or polymerizable component in accordance with a non-limiting embodiment of the present invention, have minimal migration out of the coating. Example photosensitive compositions and/or photochromic compositions and methods for making them are identified in U.S. Patent Application Publication No. 2006/0014099 A1.

In general, the colorant can be present in the film-forming composition in any amount sufficient to impart the desired property, visual and/or color effect. The colorant may comprise from 1 to 65 weight percent of the present compositions, such as from 3 to 40 weight percent or 5 to 35 weight percent, with weight percent based on the total weight of the compositions.

The multi-layer coating system of the present invention further comprises a topcoat composition applied over at least a portion of the first coating layer. In certain embodiments, the topcoat is deposited from a film-forming composition comprising a functional component containing hydroxyl and/or amine groups (such as a polyamine or polymeric polyol) and a curing agent having isocyanate and/or anhydride functional groups.

The functional component in the topcoat composition comprises an acrylic polymer, a polyester polymer, a polyurethane polymer, a polyurea polymer and/or a polyether polymer. Often an acrylic polymer and/or polyester polymer is used.

Suitable acrylic polymers include copolymers of one or more alkyl esters of acrylic acid or methacrylic acid, optionally together with one or more other polymerizable ethylenically unsaturated monomers. Useful alkyl esters of acrylic acid or methacrylic acid include aliphatic alkyl esters containing from 1 to 30, such as 4 to 18 carbon atoms in the alkyl group. Non-limiting examples include methyl methacrylate, ethyl methacrylate, butyl methacrylate, ethyl acrylate, butyl acrylate, and 2-ethyl hexyl acrylate. Suitable other copolymerizable ethylenically unsaturated monomers include vinyl aromatic compounds such as styrene and vinyl toluene; nitriles such as acrylonitrile and methacrylonitrile; vinyl and vinylidene halides such as vinyl chloride and vinylidene fluoride and vinyl esters such as vinyl acetate.

The acrylic copolymer may include hydroxyl functional groups, which are often incorporated into the polymer by including one or more hydroxyl functional monomers in the reactants used to produce the copolymer. Useful hydroxyl functional monomers include hydroxyalkyl acrylates and methacrylates, typically having 2 to 4 carbon atoms in the hydroxyalkyl group, such as hydroxyethyl acrylate, hydroxypropyl acrylate, 4-hydroxybutyl acrylate, hydroxy functional adducts of caprolactone and hydroxyalkyl acrylates, and corresponding methacrylates, as well as the beta-hydroxy ester functional monomers described below.

Beta-hydroxy ester functional monomers can be prepared, for example, from ethylenically unsaturated, epoxy functional monomers and carboxylic acids having from 13 to 20 carbon atoms, or from ethylenically unsaturated acid functional monomers and epoxy compounds containing at least 5 carbon atoms that are not polymerizable with the ethylenically unsaturated acid functional monomer.

Useful ethylenically unsaturated, epoxy functional monomers used to prepare the beta-hydroxy ester functional monomers include, but are not limited to, glycidyl acrylate, glycidyl methacrylate, allyl glycidyl ether, methallyl glycidyl ether, 1:1 (molar) adducts of ethylenically unsaturated monoisocyanates with hydroxy functional monoepoxides such as glycidol, and glycidyl esters of polymerizable polycarboxylic acids such as maleic acid. Glycidyl acrylate and glycidyl methacrylate are particularly suitable. Examples of carboxylic acids include, but are not limited to, saturated monocarboxylic acids such as isostearic acid and aromatic unsaturated carboxylic acids.

Useful ethylenically unsaturated acid functional monomers used to prepare the beta-hydroxy ester functional monomers include monocarboxylic acids such as acrylic acid, methacrylic acid, crotonic acid; dicarboxylic acids such as itaconic acid, maleic acid and fumaric acid; and monoesters of dicarboxylic acids such as monobutyl maleate and monobutyl itaconate. The ethylenically unsaturated acid functional monomer and epoxy compound are typically reacted in a 1:1 equivalent ratio. The epoxy compound does not contain ethylenic unsaturation that would participate in free radical-initiated polymerization with the unsaturated acid functional monomer. Useful epoxy compounds include 1,2-pentene oxide, styrene oxide and glycidyl esters or ethers, such as those containing from 8 to 30 carbon atoms, such as butyl glycidyl ether, octyl glycidyl ether, phenyl glycidyl ether and para-(tertiary butyl) phenyl glycidyl ether. Suitable glycidyl esters include those of the structure: 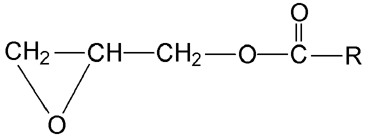 where R is a hydrocarbon radical containing from 4 to 26 carbon atoms. R can be a branched hydrocarbon group having from 8 to 10 carbon atoms, such as neopentanoate, neoheptanoate or neodecanoate. Suitable glycidyl esters of carboxylic acids include VERSATIC ACID 911 and CARDURA E, each of which is commercially available from Shell Chemical Co.

A polyester polymer may be used in the topcoat composition. Such polymers may be prepared in a known manner by condensation of a polyhydric alcohol and a polycarboxylic acid. Suitable polyhydric alcohols include, but are not limited to, ethylene glycol, propylene glycol, butylene glycol, 1,6-hexylene glycol, neopentyl glycol, diethylene glycol, glycerol, trimethylol propane, and pentaerythritol. Suitable polycarboxylic acids include, but are not limited to, succinic acid, adipic acid, azelaic acid, sebacic acid, maleic acid, fumaric acid, phthalic acid, tetrahydrophthalic acid, hexahydrophthalic acid, and trimellitic acid. Besides the polycarboxylic acids mentioned above, functional equivalents of the acids such as anhydrides where they exist or lower alkyl esters of the acids such as the methyl esters may be used.

Polyurethanes can also be used in the topcoat composition. Among the polyurethanes that can be used are polymeric polyols, which generally are prepared by reacting a polyester polyol and/or acrylic polyol such as those described herein with a polyisocyanate such that the OH/NCO equivalent ratio is greater than 1:1 so that free hydroxyl groups are present in the product. The organic polyisocyanate that is used to prepare the polyurethane polyol can be an aliphatic or an aromatic polyisocyanate or a mixture of the two. Diisocyanates are more suitable, although higher polyisocyanates can be used in place of or in combination with diisocyanates. Examples of suitable aromatic diisocyanates are 4,4'-diphenylmethane diisocyanate and toluene diisocyanate. Examples of suitable aliphatic diisocyanates are straight chain aliphatic diisocyanates such as 1,6-hexamethylene diisocyanate. Also, cycloaliphatic diisocyanates can be employed. Examples include isophorone diisocyanate and 4,4'-methylene-bis-(cyclohexyl isocyanate). Examples of suitable higher polyisocyanates are 1,2,4-benzene triisocyanate and polymethylene polyphenyl isocyanate. As with the polyesters, the polyurethanes can be prepared with unreacted carboxylic acid groups, which upon neutralization with bases such as amines allows for dispersion into aqueous medium.

Examples of polyether polyols are polyalkylene ether polyols, which include those having the following structural formula: 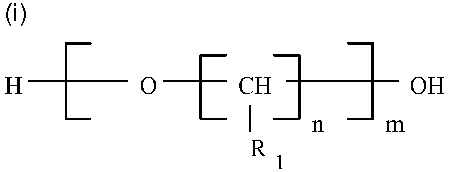 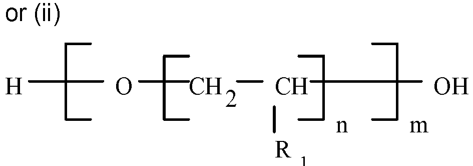 where the substituent R₁ is hydrogen or lower alkyl containing from 1 to 5 carbon atoms including mixed substituents, and n is typically from 2 to 6 and m is from 8 to 100 or higher. Included are poly(oxytetramethylene) glycols, poly(oxytetraethylene) glycols, poly(oxy-1,2-propylene) glycols, and poly(oxy-1,2-butylene) glycols.

Also useful are polyether polyols formed from oxyalkylation of various polyols, for example, diols such as ethylene glycol, 1,6-hexanediol, Bisphenol A and the like, or other higher polyols such as trimethylolpropane, pentaerythritol, and the like. Polyols of higher functionality that can be utilized as indicated can be made, for instance, by oxyalkylation of compounds such as sucrose or sorbitol. One commonly utilized oxyalkylation method is reaction of a polyol with an alkylene oxide, for example, propylene or ethylene oxide, in the presence of an acidic or basic catalyst. Particular polyethers include those sold under the names TERATHANE and TERACOL, available from E. I. Du Pont de Nemours and Company, Inc., and POLYMEG, available from Q O Chemicals, Inc., a subsidiary of Great Lakes Chemical Corp.

When the functional component contains amine functional groups, they may be monoamines, diamines, triamines or mixtures thereof. The amines also may be aromatic or aliphatic (e.g., cycloaliphatic). In one embodiment, the amine component comprises aliphatic amines to provide enhanced durability. The amine typically is provided as a liquid having a relatively low viscosity (e.g., less than about 100 mPa•s at 25° C). In a particular embodiment, the amine component is based upon mixtures of primary and secondary amines. For example, if a mixture of primary and secondary amines is employed, the primary amine can be present in an amount of 20 to 80 percent by weight or 20 to 50 percent by weight, with the balance being secondary amines.

In certain embodiments, the amine-functional component includes at least one secondary amine present in an amount of 20 to 80 percent by weight or 50 to 80 percent by weight. Suitable secondary amines can include mono-functional acrylate or methacrylate modified aliphatic polyamines. Examples of suitable aliphatic polyamines include, without limitation, ethylamine, the isomeric propylamines, butylamines, pentylamines, hexylamines, cyclohexylamine, ethylene diamine, 1,2-diaminopropane, 1,4-diaminobutane, 1,3-diaminopentane, 1,6-diaminohexane, 2-methyl-1,5-pentane diamine, 2,5-diamino-2,5-dimethylhexane, 2,2,4- and/or 2,4,4-trimethyl-1,6-diaminohexane, 1,11-diaminoundecane, 1,12-diaminododecane, 1,3- and/or 1,4-cyclohexane diamine, 1-amino-3,3,5-trimethyl-5-aminomethyl-cyclohexane, 2,4- and/or 2,6-hexahydrotoluylene diamine, 2,4'- and/or 4,4'-diamino-dicyclohexyl methane and 3,3'-dialkyl4,4'-diamino-dicyclohexyl methanes (such as 3,3'-dimethyl-4,4'-diamino-dicyclohexyl methane and 3,3'-diethyl-4,4'-diamino-dicyclohexyl methane), 2,4- and/or 2,6-diaminotoluene and 2,4'- and/or 4,4'-diaminodiphenyl methane, or mixtures thereof.

In certain embodiments of the present invention, the secondary amine includes an aliphatic amine, such as a cycloaliphatic diamine. Such amines are available commercially from Huntsman Corporation (Houston, TX) under the designation of JEFFLINK such as JEFFLINK 754. Alternatively, the amine can be provided as an amine-functional resin. Such an amine-functional resin can be a relatively low viscosity, amine-functional resin suitable for use in the formulation of high solids polyurea coatings. While any of a number of different amine-functional resins may be suitable, in particular embodiments of the invention, the amine-functional resin comprises an ester of an organic acid, for example, an aspartic ester-based amine-functional reactive resin that is compatible with isocyanates; e.g., one that is solvent-free, and/or has a mole ratio of amine-functionality to the ester of no more than 1:1 so there remains no excess primary amine upon reaction. One example of such polyaspartic esters is the derivative of diethyl maleate and 1,5-diamino-2-methylpentane, available commercially from Bayer Corporation of Pittsburgh, PA, under the trade name DESMOPHEN NH1220. Other suitable compounds containing aspartate groups may be employed as well. Additionally, the secondary polyamines can include polyaspartic esters, which can include derivatives of compounds such as maleic acid, fumaric acid esters, aliphatic polyamines and the like.

The amine-functional component also may include high molecular weight primary amines, such as polyoxyalkyleneamines. The polyoxyalkyleneamines can contain two or more primary amino groups attached to a backbone, derived, for example, from propylene oxide, ethylene oxide, or a mixture thereof. Examples of such amines include those available under the designation JEFFAMINE from Huntsman Corporation. Such amines typically have a molecular weight ranging from 200 to 7500, such as, without limitation, JEFFAMINE D-230, D-400, D-2000, T-403 and T-5000.

In certain embodiments of the present invention, the topcoat is deposited from a film-forming composition comprising a fluorinated acrylic polymer. Nonlimiting examples of suitable fluoropolymers include fluoroethylene-alkyl vinyl ether alternating copolymers (such as those described in U.S. Patent No. 4,345,057) available from Asahi Glass Company under the name LUMIFLON; fluoroaliphatic polymeric esters commercially available from 3M of St. Paul, Minnesota under the name FLUORAD; and perfluorinated hydroxyl functional (meth)acrylate resins.

The topcoat composition further comprises a curing agent having isocyanate and/or anhydride functional groups.

Anhydrides may include any of those known to be useful in the art as curing agents, for example, maleic anhydride, phthalic anhydride, tetrahydrophthalic anhydride, hexahydrophthalic anhydride, methylhexahydrophthalic anhydride, chlorendic anhydride, and the like. Mixtures of anhydrides may also be used.

When the curing agent comprises isocyanate, it may be a polyisocyanate, and it may be selected from one or more polyisocyanates such as diisocyanates and triisocyanates including biurets and isocyanurates. Diisocyanates include toluene diisocyanate, 4,4'-methylene-bis(cyclohexyl isocyanate), isophorone diisocyanate, an isomeric mixture of 2,2,4- and 2,4,4-trimethyl hexamethylene diisocyanate, 1,6-hexamethylene diisocyanate, tetramethyl xylylene diisocyanate and/or 4,4'-diphenylmethylene diisocyanate. Biurets of any suitable diisocyanate including 1,4-tetramethylene diisocyanate and 1,6-hexamethylene diisocyanate may be used. Also, biurets of cycloaliphatic diisocyanates such as isophorone diisocyanate and 4,4'-methylene-bis-(cyclohexyl isocyanate) can be employed. Examples of suitable aralkyl diisocyanates from which biurets may be prepared are meta-xylylene diisocyanate and α,α,α',α'-tetramethylmeta-xylylene diisocyanate.

Trifunctional isocyanates may also be used as the curing agent, for example, trimers of isophorone diisocyanate, triisocyanato nonane, triphenylmethane triisocyanate, 1,3,5-benzene triisocyanate, 2,4,6-toluene triisocyanate, an adduct of trimethylol and tetramethyl xylene diisocyanate sold under the name CYTHANE 3160 by CYTEC Industries, and DESMODUR N 3300, which is the isocyanurate of hexamethylene diisocyanate, available from Bayer Corporation. Specifically used polyisocyanates are cyclic isocyanates, particularly, isocyanurates of diisocyanates such as hexamethylene diisocyanate and isophorone diisocyanate.

The polyisocyanate may also be one of those disclosed above, chain extended with one or more polyamines and/or polyols using suitable materials and techniques known to those skilled in the art.

When the curing agent has isocyanate functional groups and the topcoat has hydroxyl or amine groups, the amount of isocyanate used is in relative excess to the hydroxyl and/or amine groups in the topcoat composition. The equivalent ratio of isocyanate groups in the curing agent to hydroxyl/amine groups is greater than 1 to 1 (i.e. > 1:1). Thus isocyanate is in stoichiometric excess. In particularly suitable embodiments, when the functional component (a) of topcoat (2) comprises hydroxyl groups, the NCO:OH may be 1.1 to 2.0:1, such as 1.1 to 1.7:1, or 1.3 to 1.7:1, or 1.5 to 1.7:1. In other particularly suitable embodiments, when the functional component (a) of topcoat (2) comprises amine groups, the NCO:NH may be 1.03 to 1.10:1, such as 1.05 to 1.08:1. Higher isocyanate levels in all of these ratios can also be used.

When the functional component (a) in the topcoat composition (2) is a polyamine, the volume ratio of the isocyanate-functional curing agent to the amine-functional component in an impingement mixing device can be typically 1:1. This 1:1 volume ratio is selected to ensure proper mixing within a standard impingement mixing device. One example of a commercially available mixing device is a GUSMER VR-H-3000 proportioner fitted with a GUSMER Model GX-7 spray gun. In that device, pressurized streams of the separate components (functional component and curing agent) are delivered from two separate chambers of a proportioner and are impacted or impinged upon each other at high velocity to effectuate an intimate mixing of the two components to form a polyurea composition, which is coated onto the desired substrate via the spray gun. During mixing, the components are atomized and impinged on each other at high pressure. Superior control of the polyurea reaction is achieved when the forces of the component streams are balanced. The mixing forces experienced by the component streams are determined by the volume of each stream entering the mixing chamber per unit time and the pressure at which the component streams are delivered. A 1:1 volume ratio of the components per unit time serves to equalize those forces.

The ratio of equivalents of isocyanate groups to amine groups may be selected to control the rate of cure of the polyurea coating composition, thereby affecting adhesion. It has been found that two-component polyurea compositions produced in a 1:1 volume ratio have advantages particularly in curing and adhesion when the ratio of the equivalents of isocyanate groups to amine groups (also known as the reaction index) is greater than one, such as the ratios described above. The isocyanate-functional component and the amine-functional component can be selected from any of the isocyanates (including polyisocyanates) and amines listed above to provide a reaction index that is greater than one, while maintaining a 1:1 volume ratio and acceptable performance of the resulting coating.

Like the film-forming composition used as the first coating layer, the topcoat composition can include a variety of optional ingredients and/or additives such as curing catalysts, colorants, reinforcements, thixotropes, accelerators, surfactants, plasticizers, extenders, stabilizers, corrosion inhibitors, diluents, hindered amine light stabilizers, UV light absorbers, and antioxidants.

In certain embodiments of the present invention, the multi-layer coating system further comprises a second topcoat composition applied over at least a portion of the topcoat composition. In certain embodiments, the second topcoat can be deposited from a film-forming composition comprising a functional component containing hydroxyl and/or amine groups as above, and a curing agent having isocyanate and/or anhydride functional groups as above. The second topcoat may be the same as or different from the topcoat. In particularly suitable embodiments, the second topcoat comprises a fluorinated acrylic polymer. In certain other particularly suitable embodiments, the second topcoat comprises a polyurea or a polyurea/polyurethane coating, such as those commercially available from PPG Industries.

The compositions used in the multi-layer coating system of the present invention are typically liquid, and may be solventborne or waterborne. Liquid compositions that are suitable for use in the present invention include liquid resin systems that are 100 percent solids, liquid resins that are dissolved or dispersed in a liquid medium, and solid particulate resins that are dispersed in a liquid medium. Liquid media may be aqueous based or organic solvent based.

The curable compositions used in the multi-layer coating system of the present invention can be prepared in a number of ways, including as a one-package composition with a latent curing agent, curable at elevated temperatures including what are conventionally known as "low-bake" temperatures. Alternatively, the curable compositions used in the multi-layer coating system of the present invention can be prepared as a two-package composition, typically curable at ambient temperature or under low-bake conditions. Two-package curable compositions are typically prepared by combining the ingredients of each package immediately before use, as described above with respect to the polyamine compositions. A one-package composition can be prepared in advance of use and stored.

As noted above, the multi-layer coating system is applied to at least a portion of a composite. A "composite" will be generally understood as referring to engineering materials made from two or more different materials. Typically, the two or more materials have different, sometimes significantly different, physical and/or chemical properties. The composite has a matrix material and a reinforcement material; the matrix surrounds and supports the reinforcement. The composites of the present invention typically comprise a polymeric material as the matrix and a fiber as the reinforcement. The fiber can comprise, for example, glass fibers (i.e. fiberglass), carbon fibers, aramid fibers, Kevlar fibers, fibers made from natural materials, and fibers made from nanoparticles. Suitable polymeric material can be thermoplastic or thermoset and includes, for example, polyester and epoxy. Typically, at least one of the fibers will be coated with or embedded in, at least in part, the polymeric material. A particular example includes fiber-reinforced composite materials, such as reinforced fiberglass composites, which are particularly suitable for wind blade construction. Fiber reinforced polymers, such as plastics, are also within the scope of "composites" as that term is used herein. A composite substrate according to the present invention may have one continuous surface, two or more surfaces such as two opposing surfaces, or any other configuration. In a particular embodiment, the substrate is a composite in the form of a wind blade.

Before depositing any coating compositions upon the surface of the composite, it may be desired to remove foreign matter from the surface by thoroughly cleaning and, if relevant, degreasing the surface. Such cleaning typically takes place after forming the substrate (by molding, for example) into an end-use shape. The surface of the substrate can be cleaned by physical or chemical means, or both, such as mechanically abrading the surface or cleaning/degreasing with commercially available alkaline or acidic cleaning agents are well known to those skilled in the art, such as sodium metasilicate and sodium hydroxide. A non-limiting example of a cleaning agent is CHEMKLEEN 163, an alkaline-based cleaner commercially available from PPG Industries, Inc. Other cleaners, such as those suitable for cleaning fiberglass composites or plastic materials, could also be used.

Following the cleaning step, the substrate may be rinsed with deionized water or an aqueous solution of rinsing agents in order to remove any residue. The substrate can be air dried, for example, by using an air knife, by flashing off the water by brief exposure of the substrate to a high temperature or by passing the substrate between squeegee rolls. In order to optimize surface readiness (smoothness), putty may be applied to fill surface defects. Any putty compositions known to be useful in the fields of aerospace and automotive substrate preparation or repair and coatings are suitable for use. Putty is typically applied by hand with a blade and sanded to achieve an acceptably smooth surface. An air knife can also be used to remove the residue from sanding.

The compositions may be applied to the composite by one or more of a number of methods including spraying, rolling, curtain coating, dipping/immersion, brushing, or flow coating, but they are most often applied by spraying. The usual spray techniques and equipment for air spraying and electrostatic spraying and either manual or automatic methods can be used. The first coating layer typically has a dry film thickness of 2-25 mils, often 5-25 mils.

After forming a film of the first coating layer on the substrate, the first coating layer can be cured or alternatively given a drying step in which solvent is driven out of the coating film by heating or an air drying period before application of the topcoat. Suitable drying conditions may depend, for example, on the particular coating composition, and on the ambient temperature and humidity.

The topcoat may be applied to the first coating layer using any of the methods described above and allowed to cure. The topcoat may be applied to the first coating layer wet-on-wet, or the first coating layer may be dried and/or cured prior to application of the topcoat. The dry film thickness of the topcoat may be, for example, 25.4 - 635 µm (1.0 - 25 mils), such as 101.6 - 381 µm (4 - 15 mils).

In certain embodiments of the present invention, a "tie coat" may be applied between the first coating layer and the topcoat. A tie coat will be understood as referring to a coating layer between two other coating layers, such as a top layer and bottom layer, that facilitates removal of the top layer. For example, in repair of the coating layers on a substrate, it may be desired to remove an old topcoat, such as one that has become aged and perhaps damaged by environmental or other external forces; the old topcoat can be replaced by a new topcoat. In such processes, however, it is often desirable to retain the bottom layer, such as a primer layer, putty layer, and the like. Removal of such layer might lead to damage of the substrate, or replacement of the layer may be unnecessary and/or too labor intensive. Use of a tie coat facilitates such repair by allowing relatively easy removal of the top layer without disturbing the bottom layer. Examples of suitable tie coats include any known to be useful as industrial tie coats, particularly those in the aerospace industry.

In certain embodiments of the present invention, the composite comprising the coating layer and a topcoat further comprises a second topcoat composition applied over at least a portion of the topcoat composition as described above. In a particular embodiment, when the composite is in the form of a wind blade, the second topcoat composition may be applied to the leading edge of the wind blade. The second topcoat may be applied using any of the application methods disclosed above. It will be appreciated that application of any of the coatings described herein is distinct from tape or appliques sold for this purpose. The present methods may offer advantages in application and/or durability as compared to tape/appliques.

In certain other embodiments of the present invention, the composite has applied thereto a gel coat. The gel coats can comprise, for example, epoxy resin, polyester resin or any other suitable material. Gel coats are often applied to composite material, such as fiber reinforced composites, to provide a higher quality finish to the composite surface. The composite having the gel coat layer can be further coated according to the present invention by application of any combination of the coatings described herein. A first coating layer deposited from a primer composition is used. Any of the topcoats and/or second topcoats described herein can be applied. Such application can be to all or part of the composite, or any combination thereof.

The compositions described herein can be cured by any appropriate means, such as by allowing them to stand at ambient temperature, or a combination of ambient temperature cure and baking, or by baking alone. The compositions can be cured at ambient temperature typically in a period ranging from 24 hours to 36 hours. If ambient temperature and baking are utilized in combination, the composition is typically allowed to stand for a period of from 10 minutes to 24 hours followed by baking at a temperature up to 140°F (60°C), for a period of time ranging from 20 minutes to 1 hour. Alternatively, curing by exposure to infrared (IR) radiation for a time sufficient to effect cure of the functional groups is also suitable.

After application of the multi-layer coating system of the present invention to a composite substrate and upon curing, the coated substrate often demonstrates a 60° gloss less than 50. Moreover, the coated substrate demonstrates a rain erosion resistance rating of at least 1, such as at least 3, at least 5 or higher than 5, as determined by the RAIN EROSION RESISTANCE TEST METHOD described in the examples below.

The present invention is further directed to a method for repairing a wind blade, comprising applying to at least a portion of a wind blade the coatings described above. The coatings can be applied to substantially all of the wind blade and in other embodiments they can be applied to the leading edge of the wind blade. In certain embodiments, one or more of the topcoats as described above can be applied to at least a portion of the wind blade. The wind blade repaired in this manner can have a pre-existing coating or coating layers, some or all of which may be removed prior to application of the topcoat. Alternatively, the newly added topcoat could be painted over the existing coating and would be a "second" topcoat. In this embodiment, a tie coat or other adhesion-promoting layer may be applied to the existing coating. One or more coatings can also be applied to just the leading edge; alternatively, one or more coatings can be applied to substantially all of the wind blade and one or more coatings applied to just the leading edge.

The following examples are intended to illustrate various embodiments of the invention, and should not be construed as limiting the invention in any way.

### EXAMPLES

The RAIN EROSION RESISTANCE TEST METHOD was performed as follows. Coatings were applied to sanded air foil test coupons. Test coupons were attached to a whirling arm apparatus. Samples were exposed to 7.62 cm (3 inches) per hour water spray that had a droplet size on the order of 1-4 mm. The whirling arm rotational velocity was approximately 563 km/h (350 mph). Testing occurred in intervals of 15 minutes. A rating scale of 0 to 15 was used for evaluating performance, in other words, time to fail. Failure is defined as the time where coating loss is first observed. If failure occurred before 15 minutes, the rating was "0". The higher the rating the better the rain erosion performance. The scale is defined below.

| TIME minutes | 15 | 30 | 45 | 60 | 75 | 90 | 105 | 120 | 135 | 150 | 165 | 180 | 195 | 210 | 225 | >225 |
|---|---|---|---|---|---|---|---|---|---|---|---|---|---|---|---|---|
| RATING | 0 | 1 | 2 | 3 | 4 | 5 | 6 | 7 | 8 | 9 | 10 | 11 | 12 | 13 | 14 | 15 |

Coatings were reduced to a sprayable viscosity utilizing solvents recommended in the product data sheets of the respective coatings. Test foils of aluminum and/or epoxy filled fiberglass were used, as indicated below. The test foils were prepared by cleaning with a degreasing solution, DX 330, available from PPG Industries. The solution was used to wet a cloth or paper towel, and the cloth was used to wipe the exterior surface of the foil. The foil was allowed to dry in ambient conditions for 5-10 minutes. The primer coating layer was applied using hand held HVLP spray guns to a dry film build of 101.6 - 203.2 µm (4-8 mils). The primer layer was allowed to dry at ambient conditions for 20-30 minutes. The topcoat layers were then applied to the foils using similar spray equipment, to a dry film build of 76.2 - 254 µm (3-10 mils), and allowed to flash for 10-15 minutes. If a leading edge coating was utilized, it was applied next, using similar equipment. The leading edge coating was applied only to the rounded surface of the foil (the leading edge). The completed foil was then allowed to flash dry for 10-15 minutes, then cured at ambient conditions for a period of 7 days prior to testing.

### Topcoat Coating Examples

| | Example 1 | Example 1 | Example 2 | Example 2 | Example 3 | Example 3 |
|---|---|---|---|---|---|---|
| Materials | Weight | % | Weight | % | Weight | % |
| SELEMIX 7-543 | 105.3 g | 83.34 | 105.3 g | 80.90 | 105.3 g | 76.40 |
| DESMODUR N-3300A | 21.05 g | 16.66 | 24.87 g | 19.10 | 32.53 g | 23.60 |
| Total | 126.35 g | 100 | 130.17 g | 100 | 137.83 g | 100 |
| NCO:OH Ratio | 1.1 : 1.0 | | 1.3 : 1.0 | | 1.7 : 1.0 | |

| | | | | | | |
|---|---|---|---|---|---|---|
| SELEMIX 7-543 is polyurethane coating available from PPG Industries. DESMODUR N-3300A is an isocyanate available from Bayer Material Science. SELEMIX 7-543 was in one pack and DESMODUR N-3300A was in the other pack of a two-pack coating formulation, which was mixed prior to spraying. | | | | | | |

**Table 1 Test Results for Topcoat with and without Primer**

| Primer Layer | Topcoat Layer | Whirling arm rating |
|---|---|---|
| None | Example 1 | 0 |
| SELEMIX 2.704.0100 | Example 1 | 1 |

| | | |
|---|---|---|
| SELEMIX 2.704.0100 is an epoxy primer available from PPG Industries. Coating layer(s) were applied to and tested on both aluminum and fiberglass foils. Test results were the same for both substrates. | | |

**Table 2 Test Results for Various NCO:OH Ratio**

| Primer Layer | Topcoat Example No. | NCO:OH Ratio | Whirling arm rating |
|---|---|---|---|
| SELEMIX 2.704.0100 | 1 | 1.1:1.0 | 1 |
| SELEMIX 2.704.0100 | 2 | 1.3:1.0 | 3 |
| SELEMIX 2.704.0100 | 3 | 1.7:1.0 | 5 |

| | | | |
|---|---|---|---|
| Coating layers were applied to and tested on aluminum foils only. | | | |

**Table 3 Test Results for Leading Edge Compositions**

| **Primer Coating** | **Topcoat Coating** | **Leading Edge Coating** | **Whirling arm rating** |
|---|---|---|---|
| SELEMIX 2.704.0100 | Example 1 | none | **1** |
| SELEMIX 2.704.0100 | Example 1 | BDL 1724H | 9 (fiberglass) 7 (aluminum) |
| SELEMIX 2.704.0100 | Example 1 | ADS2000030 CORAFLON K&L WHITE | 9 |
| SELEMIX 2.704.0100 | Example 1 | AUE-87035 | 13 |

| | | | |
|---|---|---|---|
| BDL 1724H is a polyurea available from PPG Industries. ADS2000030 CORAFLON K&L WHITE is a fluorinated acrylic available from PPG Industries. AUE-87035 is a polyurethane available from PPG Industries. Coating layers were applied to and tested on both aluminum and fiberglass foils. Test results were the same for both substrates unless indicated otherwise. | | | |

## Claims

1. A composite comprising a multi-layer coating system applied to at least a portion thereof, comprising:
(1) a first coating layer deposited from a primer composition;
(2) a topcoat composition applied over at least a portion of the first coating layer in which the topcoat is deposited from
(2A) a film-forming composition comprising a fluorinated acrylic polymer; or
(2B) a film-forming composition comprising:
(a) a functional component comprising hydroxyl and/or amine groups wherein the functional component is selected from an acrylic polymer, a polyester polymer, a polyurethane polymer, a polyurea polymer and/or a polyether polymer; and
(b) a curing agent comprising isocyanate and/or anhydride functional groups;
and when the curing agent comprises isocyanate, the ratio of isocyanate to hydroxyl and/or amine groups is >1:1 and wherein the composite comprises a matrix material and a reinforcement material.

2. The composite of claim 1, further comprising
(3) a second topcoat composition that is the same as or different from the topcoat composition (2B), applied over at least a portion of the topcoat composition (2B), wherein the second topcoat (3) is deposited from a film-forming composition comprising:
(a) a functional component containing hydroxyl and/or amine groups; and
(b) a curing agent having isocyanate and/or anhydride functional groups;
and when the curing agent comprises isocyanate, the ratio of isocyanate to hydroxyl and/or amine groups is >1:1.

3. The composite of claim 1, further comprising
(3) a second topcoat composition that is the same as or different from the topcoat composition (2B), applied over at least a portion of the topcoat composition (2B), wherein the second topcoat (3) is deposited from a film-forming composition comprising a fluorinated acrylic polymer.

4. The composite of claim 1, wherein in case the topcoat is deposited from the film forming composition (2B) the primer composition in the first coating layer comprises:
(i) a functional polymer containing epoxide and/or hydroxyl groups;
(ii) a curing agent having functional groups reactive with the epoxide or hydroxyl groups in (i); and
(iii) a filler.

5. The composite of claim 4, wherein the filler comprises barium sulfate, silica, and/or titanium dioxide.

6. The composite of claim 4, wherein the functional polymer (i) in the primer composition comprises polyepoxide comprising a polyglycidyl ether of Bisphenol A.

7. The composite of claim 1, wherein in case the topcoat is deposited from the film forming composition (2B) the primer composition in the first coating layer comprises polyurethane.

8. The composite of claim 1, wherein the functional component (a) in the topcoat composition (2B) comprises a polyurethane polymer or a polyurea polymer.

9. The composite of claim 1, wherein in the topcoat composition (2B), the functional component (a) has hydroxyl functional groups and the curing agent (b) has isocyanate functional groups, preferably the curing agent (b) comprises a trimer of hexamethylene diisocyanate, and the equivalent ratio of isocyanate groups in (b) to hydroxyl groups in (a) is 1.1 to 1.7:1.

10. The composite of claim 1, wherein in the topcoat composition (2B), the functional component (a) has amine functional groups and the curing agent (b) has isocyanate functional groups and the equivalent ratio of isocyanate groups in (b) to amine groups in (a) is 1.03 to 1.10:1.

11. The composite of claims 2 or 3, wherein the composite is a wind blade and the second topcoat is mandatory and is applied to the leading edge of the wind blade.

12. A method of repairing a wind blade comprising applying to a wind blade the multilayer coating system as defined in claim 1.

13. A method of coating a composite comprising applying a multi-layer coating system as defined in any one of claims 1 to 10 to at least a portion of the composite.

14. The method of claim 13, wherein the composite is in the form of a wind blade.

## Patentansprüche

1. Verbundstoff, umfassend ein mehrlagiges Beschichtungssystem, das auf mindestens einem Teil davon aufgetragen ist, umfassend:
(1) eine erste Beschichtungslage, die aus einer Primerzusammensetzung abgeschieden ist;
(2) eine Decklackzusammensetzung, die über mindestens einem Teil der ersten Beschichtungslage aufgetragen ist, worin der Decklack abgeschieden ist aus
(2A) einer filmbildenden Zusammensetzung, die ein fluoriertes Acrylpolymer enthält, oder
(2B) einer filmbildenden Zusammensetzung, enthaltend:
(a) eine funktionelle Komponente, die Hydroxyl- und/oder Amingruppen enthält, wobei die funktionelle Komponente ausgewählt ist aus einem Acrylpolymer, einem Polyesterpolymer, einem Polyurethanpolymer, einem Polyharnstoffpolymer und/oder einem Polyetherpolymer, und
(b) ein Härtungsmittel, das Isocyanat- und/oder anhydridfunktionelle Gruppen enthält;
und wenn das Härtungsmittel Isocyanat enthält, ist das Verhältnis von Isocyanat zu Hydroxyl- und/oder Amingruppen > 1:1, und wobei der Verbundstoff ein Matrixmaterial und ein Verstärkungsmaterial enthält.

2. Verbundstoff nach Anspruch 1, der ferner umfasst:
(3) eine zweite Decklackzusammensetzung, die gleich oder unterschiedlich zu der Decklackzusammensetzung (2B) ist, aufgetragen über mindestens einem Teil der Decklackzusammensetzung (2B), wobei der zweite Decklack (3) aus einer filmbildenden Zusammensetzung abgeschieden ist, die enthält:
(a) eine funktionelle Komponente, die Hydroxyl- und/oder Amingruppen enthält, und
(b) ein Härtungsmittel mit Isocyanat- und/oder anhydridfunktionellen Gruppen
und wenn das Härtungsmittel Isocyanat enthält, ist das Verhältnis von Isocyanat zu Hydroxyl- und/oder Amingruppen > 1:1.

3. Verbundstoff nach Anspruch 1, ferner umfassend:
(3) eine zweite Decklackzusammensetzung, die gleich oder unterschiedlich zu der Decklackzusammensetzung (2B) ist, aufgetragen über mindestens einem Teil der Decklackzusammensetzung (2B), wobei der zweite Decklack (3) aus einer filmbildenden Zusammensetzung abgeschieden ist, die ein fluoriertes Acrylpolymer enthält.

4. Verbundstoff nach Anspruch 1, wobei in dem Falle, dass der Decklack aus der filmbildenden Zusammensetzung (2B) abgeschieden ist, die Primerzusammensetzung in der ersten Beschichtungslage enthält:
(i) ein funktionelles Polymer, das Epoxid- und/oder Hydroxylgruppen enthält;
(ii) ein Härtungsmittel mit funktionellen Gruppen, die mit den Epoxid- oder Hydroxylgruppen in (i) reaktiv sind, und
(iii) einen Füllstoff.

5. Verbundstoff nach Anspruch 4, wobei der Füllstoff Bariumsulfat, Siliciumdioxid und/oder Titandioxid enthält.

6. Verbundstoff nach Anspruch 4, wobei das funktionelle Polymer (i) in der Primerzusammensetzung Polyepoxid enthält, das einen Polyglycidylether von Bisphenol A enthält.

7. Verbundstoff nach Anspruch 1, wobei in dem Falle, dass der Decklack aus der filmbildenden Zusammensetzung (2B) abgeschieden ist, die Primerzusammensetzung in der ersten Beschichtungslage Polyurethan enthält.

8. Verbundstoff nach Anspruch 1, wobei die funktionelle Komponente (a) in der Decklackzusammensetzung (2B) ein Polyurethanpolymer oder Polyharnstoffpolymer enthält.

9. Verbundstoff nach Anspruch 1, wobei in der Decklackzusammensetzung (2B) die funktionelle Komponente (a) hydroxylfuntkionelle Gruppen aufweist und das Härtungsmittel (b) isocyanatfunktionelle Gruppen aufweist, vorzugsweise das Härtungsmittel (b) ein Trimer von Hexamethylendiisocyanat enthält, und das Äquivalentverhältnis von Isocyanatgruppen in (b) zu Hydroxylgruppen in (a) von 1:1 bis 1,7:1 reicht.

10. Verbundstoff nach Anspruch 1, wobei in der Decklackzusammensetzung (2B) die funktionelle Komponente (a) aminfunktionelle Gruppen aufweist und das Härtungsmittel (b) isocyanatfunktionelle Gruppen aufweist und das Äquivalentverhältnis von Isocyanatgruppen in (b) zu Amingruppen in (a) von 1,03 bis 1,10:1 reicht.

11. Verbundstoff nach Anspruch 2 oder 3, wobei der Verbundstoff ein Rotorblatt ist und der zweite Decklack zwingend ist und auf der Profilnase des Rotorblatts aufgetragen ist.

12. Verfahren zur Reparatur eines Rotorblatts, umfassend Auftragen des mehrlagigen Beschichtungssystems wie in Anspruch 1 definiert auf ein Rotorblatt.

13. Verfahren zur Beschichtung eines Verbundstoffes, umfassend Auftragen eines mehrlagigen Beschichtungssystems wie in einem der Ansprüche 1 bis 10 definiert auf mindestens einen Teil des Verbundstoffes.

14. Verfahren nach Anspruch 13, wobei der Verbundstoff die Form eines Rotorblatts aufweist.

## Revendications

1. Composite comportant un système de revêtement multicouche appliqué sur au moins une partie du composite et comprenant :
1) une première couche de revêtement, déposée à partir d'une composition de primaire ;
2) une composition de revêtement de dessus, appliquée sur au moins une partie de la première couche de revêtement,
le revêtement de dessus étant déposé à partir
2A) d'une composition filmogène comprenant un polymère polyacrylique fluoré,
2B) ou d'une composition filmogène comprenant
a) un composant fonctionnel portant des groupes hydroxyle et/ou amino, lequel composant fonctionnel est choisi parmi un polymère polyacrylique, un polymère polyester, un polymère polyuréthane, un polymère polyurée et/ou un polymère polyéther,
b) et un agent durcisseur portant des groupes fonctionnels isocyanate et/ou anhydride,
étant entendu que quand l'agent durcisseur porte des groupes isocyanate, le rapport des groupes isocyanate aux groupes hydroxyle et/ou amino vaut plus de 1/1 ;
et lequel composite comporte un matériau de matrice et un matériau de renfort.

2. Composite conforme à la revendication 1, comprenant en outre :
3) une deuxième composition de revêtement de dessus, qui est identique à la composition (2B) de revêtement de dessus ou différente de celle-ci, et qui est appliquée sur au moins une partie de la composition (2B) de revêtement de dessus, lequel deuxième revêtement de dessus (3) est déposé à partir d'une composition filmogène comprenant
a) un composant fonctionnel portant des groupes hydroxyle et/ou amino,
b) et un agent durcisseur portant des groupes fonctionnels isocyanate et/ou anhydride,
étant entendu que quand l'agent durcisseur porte des groupes isocyanate, le rapport des groupes isocyanate aux groupes hydroxyle et/ou amino vaut plus de 1/1.

3. Composite conforme à la revendication 1, comprenant en outre :
3) une deuxième composition de revêtement de dessus, qui est identique à la composition (2B) de revêtement de dessus ou différente de celle-ci, et qui est appliquée sur au moins une partie de la composition (2B) de revêtement de dessus, lequel deuxième revêtement de dessus (3) est déposé à partir d'une composition filmogène comprenant un polymère polyacrylique fluoré.

4. Composite conforme à la revendication 1, dans lequel, dans le cas où le revêtement de dessus est déposé à partir d'une composition filmogène (2B), la composition de primaire pour la première couche de revêtement comprend :
i) un polymère fonctionnel portant des groupes époxy et/ou hydroxyle,
ii) un agent durcisseur doté de groupes fonctionnels réactifs vis-à-vis des groupes époxy et hydroxyle du polymère (i),
iii) et une charge.

5. Composite conforme à la revendication 4, dans lequel la charge comprend du sulfate de baryum, de la silice, et/ou du dioxyde de titane.

6. Composite conforme à la revendication 4, dans lequel le polymère fonctionnel (i) de la composition de primaire comprend un polyépoxyde comprenant un éther polyglycidylique de bisphénol A.

7. Composite conforme à la revendication 1, dans lequel, dans le cas où le revêtement de dessus est déposé à partir d'une composition filmogène (2B), la composition de primaire pour la première couche de revêtement comprend un polyuréthane.

8. Composite conforme à la revendication 1, dans lequel le composant fonctionnel (a) de la composition de revêtement de dessus (2B) comprend un polymère polyuréthane ou un polymère polyurée.

9. Composite conforme à la revendication 1, dans lequel, dans la composition de revêtement de dessus (2B), le composant fonctionnel (a) porte des groupes fonctionnels hydroxyle et l'agent durcisseur (b) comporte des groupes fonctionnels isocyanate, et de préférence, l'agent durcisseur (b) comprend un trimère de l'hexaméthylène-diisocyanate, et le rapport d'équivalents des groupes isocyanate de l'agent (b) aux groupes hydroxyle du composant (a) vaut de 1,1/1 à 1,7/1.

10. Composite conforme à la revendication 1, dans lequel, dans la composition de revêtement de dessus (2B), le composant fonctionnel (a) porte des groupes amino et l'agent durcisseur (b) comporte des groupes fonctionnels isocyanate, et le rapport d'équivalents des groupes isocyanate de l'agent (b) aux groupes amino du composant (a) vaut de 1,03/1 à 1,10/1.

11. Composite conforme à la revendication 2 ou 3, lequel composite est une pale d'éolienne et dans lequel le deuxième revêtement de dessus est obligatoire et appliqué sur le bord d'attaque de la pale d'éolienne.

12. Procédé de réparation d'une pale d'éolienne, comportant le fait d'appliquer sur une pale d'éolienne un système de revêtement multicouche tel que défini dans la revendication 1.

13. Procédé de revêtement d'un composite, comportant le fait d'appliquer, sur au moins une partie du composite, un système de revêtement multicouche tel que défini dans l'une des revendications 1 à 10.

14. Procédé conforme à la revendication 13, dans lequel le composite est sous la forme d'une pale d'éolienne.
